# FASCICULE DE BREVET EUROPEEN

(11) **EP 3 869 659 B1**
(45) Date de publication et mention de la délivrance du brevet: **22.06.2022**
(21) Numéro de dépôt: 21157757.2
(22) Date de dépôt: 18.02.2021
(51) Int. Cl.: H02J 7/00, G05B 9/02, G05B 19/042

(54) **SYSTÈME D'ALIMENTATION ÉLECTRIQUE COMPRENANT UNE PLURALITÉ DE BATTERIES**
ENERGIEVERSORGUNGSSYSTEM MIT MEHREREN BATTERIEN
ELECTRICAL SUPPLY SYSTEM COMPRISING A PLURALITY OF BATTERIES

(30) Priorité: 18.02.2020 FR 2001578
(43) Date de publication de la demande: 25.08.2021
(73) Titulaire: SpeedInnov, 75008 Paris (FR)
(72) Inventeur: BOLLENGIER, Christophe, 68780 Sentheim (FR)
(74) Mandataire: Lavoix

(56) Documents cités:
- US-A1- 2009 088 892
- US-A1- 2013 154 360
- US-A1- 2017 077 559

## Description

La présente invention concerne un système d'alimentation électrique comprenant une pluralité de batteries équipées d'un système de commande et de protection électronique commandé par logiciel, ainsi qu'un véhicule ferroviaire équipé d'un tel système d'alimentation électrique.

L'invention se situe dans le domaine de la robustesse aux défaillances des systèmes d'alimentation électrique du type précité, et trouve des applications particulières dans tout domaine dans lequel l'alimentation électrique de charges est critique.

Par exemple, dans le domaine ferroviaire, il est connu d'utiliser un système d'alimentation comprenant une pluralité de batteries pour alimenter diverses charges dans un véhicule ferroviaire, ces charges comprenant par exemple des éclairages d'urgence, un système électrique de déblocage des portes, un système de ventilation de secours. Une éventuelle défaillance d'alimentation de telles charges risque d'avoir un effet critique sur la sécurité des passagers dans le cas du transport ferroviaire.

Pour assurer une meilleure sécurité de tels systèmes d'alimentation électrique, il est connu d'utiliser plusieurs batteries, de manière redondante.

Dans les systèmes classiques, des batteries au plomb formées d'une série d'accumulateurs au plomb-acide sulfurique raccordés en série, ou des batteries nickel-cadmium étaient utilisées.

Plus récemment, les batteries au lithium, en particulier de type lithium-ion, ont été proposées, qui présentent l'avantage d'obtenir une haute densité massique d'énergie.

Les batteries de ce type sont équipées de systèmes de protection électroniques, permettant notamment une protection contre des courts-circuits ou des surcharges. Un tel système de protection comporte notamment un ou plusieurs contacteur(s) de sécurité dont l'ouverture/fermeture est commandée par un module de commande électronique. Un tel module de commande électronique est programmé, par un logiciel, pour commander l'ouverture des contacteurs de sécurité en cas de détection d'une situation non nominale, utilisant des mesures de capteurs de température, d'intensité, de tension par exemple. Ainsi, en cas de risque critique constaté, l'alimentation des charges est coupée grâce à l'ouverture des contacteurs de sécurité, et les risques d'explosion ou autre endommagement des batteries et des charges alimentées par ces batteries sont minimisés.

Le document US 2013/154360 A1 divulgue un système d'alimentation électrique comprenant une pluralité de batteries et des systèmes de protection pour déconnecter les batteries d'une charge en cas d'anomalie d'une batterie.

Néanmoins, les modules de commande de ces batteries sont pilotés par un logiciel, et par conséquent, le risque d'un fonctionnement erroné du logiciel (communément appelé « bug ») n'est pas exclu. En effet, une erreur de programmation logicielle peut conduire à une ouverture intempestive des contacteurs de sécurité. Ce risque demeure présent même dans un système d'alimentation électrique redondant comportant plusieurs telles batteries branchées en parallèle, dans la mesure où pour chaque batterie, le module de commande implémente un même code logiciel.

L'invention a pour objectif d'améliorer la sécurité d'un système d'alimentation électrique du type précité.

A cet effet, l'invention propose, selon un aspect, un système d'alimentation électrique comprenant une pluralité de batteries équipées d'un système de commande et de protection électronique commandé par logiciel, branchées en parallèle pour alimenter en électricité une ou plusieurs charges, le système de commande et de protection électronique de chaque batterie comportant des contacteurs de sécurité placés entre ladite batterie et la ou les charges à alimenter, et un module de commande configuré pour commander une ouverture ou une fermeture des contacteurs de sécurité, ledit module de commande implémentant un logiciel. Ce système d'alimentation est configuré pour :
- détecter une configuration de défaillance commune dans laquelle, pour chaque batterie, une ouverture des contacteurs de sécurité est commandée, et
- commander une temporisation de l'ouverture desdits contacteurs de sécurité pendant une période de temporisation, et une ré-initialisation de chaque module de commande des contacteurs de sécurité des batteries durant ladite période de temporisation.

Avantageusement, le système d'alimentation électrique est configuré pour une détection d'une configuration de défaillance commune dans laquelle tous les modules de commande de toutes les batteries commandent une ouverture des contacteurs de sécurité. Dans le système d'alimentation proposé, l'ouverture des contacteurs de sécurité est retardée durant une période de temporisation, durant laquelle les modules de commande sont ré-initialisés. Ainsi, si la configuration de défaillance commune est due à un problème logiciel, la réinitialisation des modules de commande permet d'éviter une ouverture des contacteurs de sécurité liée à ce type de défaillance.

Le système d'alimentation électrique selon l'invention peut présenter une ou plusieurs des caractéristiques ci-dessous, prises indépendamment ou dans toutes leurs combinaisons techniquement acceptables.

Le système d'alimentation électrique comporte, pour chaque batterie, un relais comprenant une paire de contacts et un organe de commande de l'ouverture/fermeture de ladite paire de contacts, chaque organe de commande étant branché en sortie du module de commande de ladite batterie et la paire de contacts correspondante étant branchée en entrée d'un bloc de commande d'un premier relais temporisé.

Le premier relais temporisé comprend le bloc de commande et pour chaque batterie des contacts propres à être commandés par ledit bloc de commande, les paires de contacts étant connectées en parallèle les unes des autres entre le bloc de commande et une borne de connexion commune, lesdits contacts du premier relais temporisé étant connectés entre ladite borne de connexion commune et un circuit de sécurité correspondant configuré pour commander le ou les contacteur(s) de sécurité associé(s) à la batterie correspondante.

Lorsque chaque paire de contacts est ouverte, l'alimentation du bloc de commande du premier relais temporisé est coupée et entraîne une fermeture desdits contacts du premier relais temporisé correspondants durant la période de temporisation de durée de temporisation prédéterminée.

Les contacts du premier relais temporisé sont ouverts après écoulement de la durée de temporisation prédéterminée, ladite durée de temporisation prédéterminée étant de préférence comprise entre 10 secondes et une minute.

Le système d'alimentation électrique comporte en outre un deuxième relais temporisé propre à être mis en fonctionnement dès la coupure d'alimentation du premier relais temporisé.

Le système d'alimentation électrique comporte des contacts associés au deuxième relais temporisé branchés en entrée du module de commande de chaque batterie, et propres à commander l'alimentation en énergie électrique de chaque module de commande, la mise en fonctionnement du deuxième relais temporisé entraînant une ouverture desdits contacts associés au deuxième relais temporisé pendant une durée de redémarrage.

La durée de redémarrage est inférieure à la durée de temporisation, lesdits contacts associés au deuxième relais temporisé étant fermés suite à l'écoulement de la durée de redémarrage, la durée de redémarrage étant de préférence comprise entre 3 et 10 secondes.

Chaque système de commande et de protection comporte un circuit de sécurité associé au contacteur de sécurité et configuré pour commander, en fonction de signaux reçus du module de commande correspondant, ledit contacteur de sécurité, le circuit de sécurité comprenant une bobine et une capacité branchées en parallèle.

Les batteries du système d'alimentation électrique comportent des accumulateurs lithium-ion.

Selon un autre aspect, l'invention propose un véhicule ferroviaire comportant un système d'alimentation électrique tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 illustre schématiquement un mode de réalisation d'un système d'alimentation électrique selon l'invention dans un premier état de fonctionnement;
[Fig 2] la figure 2 illustre schématiquement un mode de réalisation d'un système d'alimentation électrique selon l'invention dans un deuxième état de fonctionnement.

L'invention telle que décrite ci-après trouve une application privilégiée dans le domaine ferroviaire, pour l'alimentation électrique des systèmes de sécurité (système de freinage d'urgence, système d'ouverture des portes d'urgence, éclairage d'urgence) dans un véhicule ferroviaire.

Néanmoins, elle s'applique également pour l'alimentation électrique basse tension de systèmes de sécurité autres, par exemple dans d'autres véhicules de transport (bus).

Le terme basse tension désigne des tensions comprises par exemple autour de 24V, à -30% ou +25%, ou autour de 72V, à -30% ou +25%, ou autour de 110V, à -30% ou +25%.

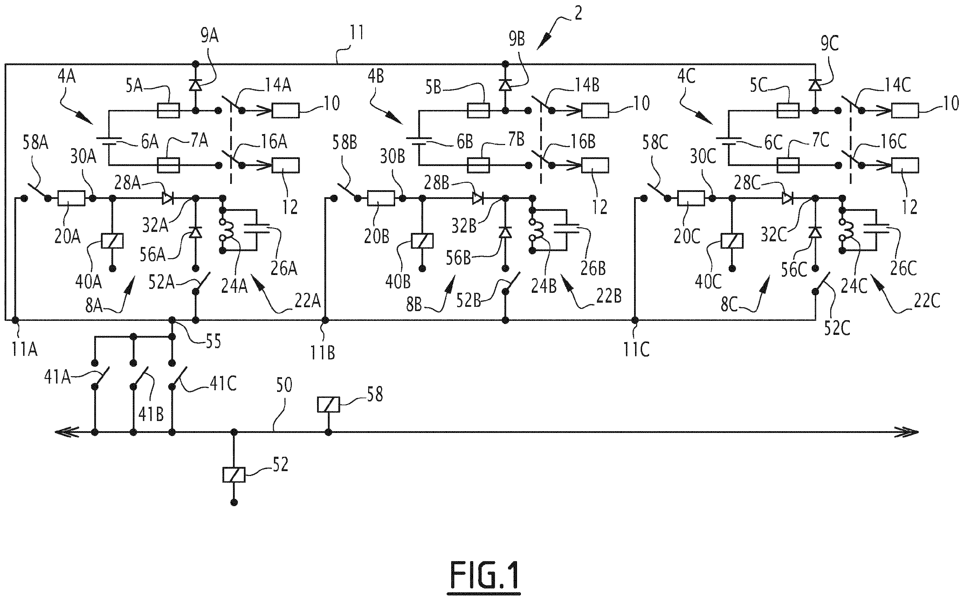

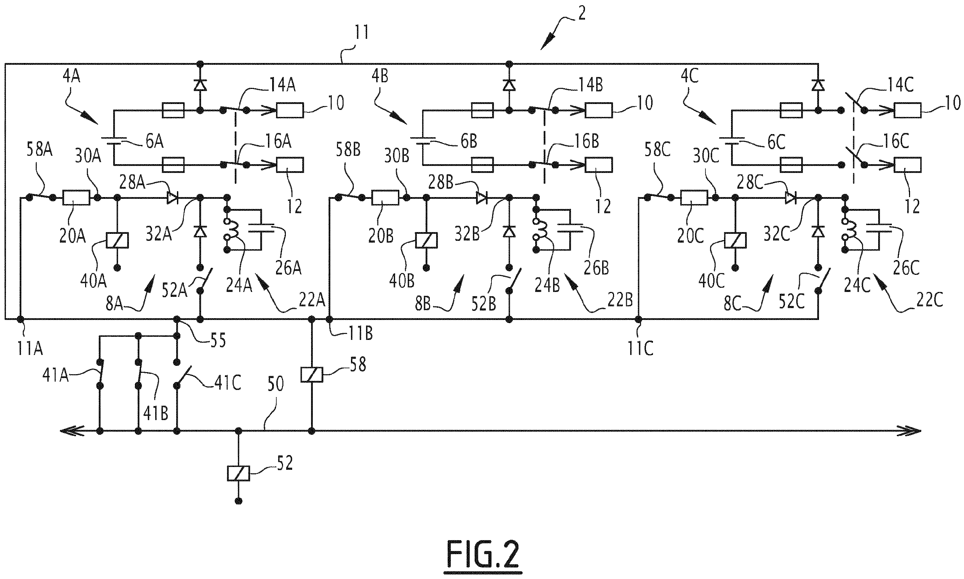

Les figures 1 et 2 illustrent un système d'alimentation électrique 2 selon un mode de réalisation de l'invention, dans deux états de fonctionnement distincts.

La figure 1 illustre un système d'alimentation électrique dans le cas où une configuration de défaillance commune des batteries est présente.

La figure 2 illustre un système d'alimentation électrique, dans un mode de fonctionnement sans défaillance commune.

Le système d'alimentation 2 comprend dans l'exemple schématique des figures 1 et 2 trois batteries 4A, 4B, 4C branchées en parallèle.

Le nombre de batteries n'est bien entendu pas limité, le système d'alimentation électrique comprend N batteries, N étant un nombre entier supérieur ou égal à 2.

Les batteries 4A, 4B, 4C, du type lithium-ion, comprennent des ensembles d'accumulateurs lithium-ion 6A, 6B, 6C, donc chaque borne est protégée par un dispositif de protection contre les courts-circuits correspondant, i.e. des fusibles, 5A, 7A ; 5B ; 7B ; 5C, 7C.

De plus des diodes 9A, 9B, 9C sont montées en sortie des dispositifs de protection contre les courts-circuits 5A, 5B, 5C associés à une borne correspondante pour chaque batterie 4A, 4B, 4C, de manière à ramener une tension indépendamment de l'ouverture de contacteurs de sécurité décrits plus en détail ci-après.

Chaque batterie 4A, 4B, 4C est équipée d'un système de commande et de protection 8A, 8B, 8C, décrit en détail ci-après.

Les diodes 9A, 9B, 9C comprennent une première borne connectée en sortie du dispositif de protection contre les courts-circuits 5A, 5B, 5C correspondant et une deuxième borne, lesdites deuxièmes bornes étant reliées les unes aux autres via un conducteur 11 connecté également à une borne d'entrée 11A, 11B, 11C de chacun des systèmes de commande et de protection 8A, 8B, 8C.

Chaque batterie 4A, 4B, 4C est adaptée à alimenter en électricité une ou plusieurs charges électriques 10, 12.

Dans le cas d'un véhicule ferroviaire, il s'agit par exemple d'un système 10 d'éclairage de sécurité et d'un système 12 d'ouverture d'urgence des portes d'un véhicule ferroviaire.

Le système de commande et de protection 8A, 8B, 8C comprend, pour chaque batterie, des contacteurs de sécurité 14A, 16A ; 14B, 16B ; 14C, 16C.

Chaque contacteur de sécurité est branché entre l'ensemble d'accumulateurs et la charge à alimenter, et est adapté à être ouvert (position d'interruption du passage de courant électrique) ou fermé (position de passage de courant électrique).

Dans la figure 1, les contacteurs de sécurité 14A, 16A ; 14B, 16B ; 14C, 16C sont montrés en mode « ouvert ».

L'ouverture et la fermeture des contacteurs de sécurité est commandée, pour chaque batterie, par un module de commande 20A, 20B, 20C propre à envoyer des signaux de commande.

Le module de commande 20A, 20B, 20C est un module électronique complexe, qui n'est pas illustré en détail. Il comprend divers capteurs de courant, de tension, de température, et un processeur adapté à exécuter un logiciel de sécurité.

Le système de commande et de protection comprend en outre un circuit de sécurité 22A, 22B, 22C, configuré pour réaliser la fonction de contacteur de sécurité. Le circuit de sécurité 22A, 22B, 22C comprend une bobine 24A, 24B, 24C et une capacité 26A, 26B, 26C branchée en parallèle de la bobine.

Une diode 28A, 28B, 28C est branchée entre une sortie 30A, 30B, 30C du module de commande 20A, 20B, 20C et le circuit de sécurité 22A, 22B, 22C qui réalise la fonction de contacteur de sécurité.

La diode est polarisée de manière à laisser passer le courant électrique entre le point 30A, 30B, 30C de sortie du module de commande 20A, 20B, 20C et un point 32A, 32B, 32C d'entrée du circuit de sécurité 22A, 22B, 22C.

Lorsqu'un module de commande 20A, 20B, 20C effectue une commande d'ouverture de contacteur de sécurité, la tension au point 30A, 30B, 30C passe à 0V. Le circuit de sécurité 22A, 22B, 22C correspondant n'est plus alimenté, ou en d'autres termes, la tension au point 32A, 32B, 32C passe également à 0V. Grâce à la présence de la capacité 26A, 26B, 26C dans le circuit de sécurité, l'ouverture du contacteur de sécurité est retardée.

Par exemple, le retard de l'ouverture d'un contacteur de sécurité est de l'ordre de 0,2s.

Le système de commande et de protection 8A, 8B, 8C de chaque batterie comporte en outre un relais 40A, 40B, 40C, branché en parallèle du circuit de sécurité 22A, 22B, 22C.

Plus précisément, chaque relais 40A, 40B, 40C comprend une paire de contacts 41A, 41B, 41C associés et un organe de commande de l'ouverture/fermeture desdits contacts référencé 40A, 40B, 40C, tel qu'une bobine, chaque organe de commande étant branché en parallèle du circuit de sécurité 22A, 22B, 22C correspondant.

Chaque paire de contacts 41A, 41B, 41C est connectée en parallèle entre le conducteur 11, à une borne de connexion commune 55, et un conducteur 50.

Chaque paire de contacts 41A, 41B, 41C est connectée à un premier relais temporisé 52 via le conducteur 50.

Plus précisément, le relais temporisé 52 comprend, pour chaque batterie, des contacts 52A, 52B, 52C associés et un bloc de commande de l'ouverture/fermeture desdits contacts référencé 52.

Lorsque le module de commande 20A, 20B, 20C effectue une commande d'ouverture de contacteur de sécurité, cela provoque une ouverture du relais 40A, 40B, 40C correspondant, c'est-à-dire des paires de contacts 41A, 41B, 41C.

Si tous les relais 40A, 40B, 40C associées à l'ensemble des batteries du système d'alimentation 2 sont ouverts, le conducteur 50 n'est plus alimenté.

Chaque contact 52A, 52B, 52C est connecté entre, d'une part le conducteur 11 et, d'autre part, un système de commande et de protection 8A, 8B, 8C correspondant via une diode 56A, 56B, 56B correspondante connectée au point 32A, 32B, 32C d'entrée du circuit de sécurité 22A, 22B, 22C correspondant.

L'ouverture de tous les relais 40A, 40B, 40C sensiblement en même temps indique la présence d'une configuration de défaillance commune, qui est supposée être due à une défaillance logicielle et non à une défaillance matérielle simultanée des batteries branchées en parallèle dans le système d'alimentation 2.

L'ouverture de tous les relais 40A, 40B, 40C c'est-à-dire des paires de contacts 41A, 41B, 41C, entraîne la mise en fonctionnement du premier relais temporisé 52, comprenant une fermeture des contacts correspondants 52A, 52B et 52C pendant une période de temporisation de durée de temporisation prédéterminée.

Par exemple la durée de temporisation est comprise de préférence entre 10 s et 1 minute, par exemple égale à 30s.

Les contacts 52A, 52B, 52C sont par exemple composées de contacts qui sont en position fermée par défaut, ainsi lorsque le bloc de commande 52 n'est plus alimenté en énergie électrique cela provoque la fermeture des contacts 52A, 52B, 52C et donc l'alimentation en énergie électrique des circuits de sécurité 22A, 22B, 22C via les contacts 52A, 52B, 52C pendant la période de temporisation.

Pendant la période de temporisation, une alimentation d'une valeur de tension donnée, par exemple 110V, est fournie au point 32A, 32B, 32C d'entrée du circuit de sécurité 22A, 22B, 22C.

L'alimentation électrique ainsi fournie induit le maintient fermé des contacteurs de sécurité 14A, 16A ; 14B, 16B ; 14C, 16C pendant la durée de de temporisation.

A la fin de la période de temporisation, les contacts 52A, 52B et 52C du premier relais temporisé 52 sont ouverts.

Dans le même temps, les modules de commande 20A, 20B, 20C sont ré-initialisés. La ré-initialisation est effectuée par une coupure d'alimentation électrique de chacun des modules de commande 20A, 20B, 20C pendant une durée de redémarrage. Dans un mode de réalisation, la durée de redémarrage est comprise entre 3 et 10 secondes, par exemple égale à 3s.

La coupure électrique est effectuée par des contacts 58A, 58B, 58C, actionnés par un deuxième relais temporisé 58. Le deuxième relais temporisé 58 comprend un organe de commande de l'ouverture/fermeture des contacts 58A, 58B, 58C référencé 58. Le deuxième relais temporisé 58 est mis en action dès que le premier relais temporisé 52 est désalimenté, c'est-à-dire dès que les relais 40A, 40B, 40C sont ouverts et ceci pendant une durée égale à la durée de redémarrage. Le deuxième relais temporisé 58 est propre à maintenir les contacts 58A, 58B, 58C en position ouverte pendant la durée de redémarrage suite à la détection de la perte d'alimentation du relai 52 via le conducteur 50.

A la fin de la durée de redémarrage, les contacts 58A, 58B, 58C sont fermés.

Dans le système d'alimentation proposé, l'ouverture des contacteurs de sécurité est retardée durant une période de temporisation, durant laquelle les modules de commande 20A, 20B, 20C sont ré-initialisés. Ainsi, si la configuration de défaillance commune est due à un problème logiciel, la réinitialisation des modules de commande permet d'éviter une ouverture des contacteurs de sécurité liée à ce type de défaillance.

Le mode de fonctionnement de la figure 2 est un mode de fonctionnement sans défaillance commune, par exemple sur défaillance uniquement du module de commande 20C de la batterie 4C. Les contacteurs de sécurité 14A, 16A ; 14B, 16B sont fermés, puisque la tension fournie aux points 32A, 32B est non nulle.

Si une défaillance matérielle est présente, elle est susceptible de toucher une des batteries du système d'alimentation, mais pas l'ensemble des batteries. Dans ce cas, grâce à l'alimentation redondante des charges, le fonctionnement est normal.

Par exemple, en cas de défaillance de la batterie 4C, seul le relais 40C est ouvert, les relais 40A et 40B demeurant fermés. Dans ce cas, les relais temporisés 52, 58 ne sont pas mis en fonctionnement.

L'invention a été décrite ci-dessus pour les batteries de type lithium-ion mais s'applique plus généralement pour tout type de batteries équipées chacune d'un système de protection électronique commandé par logiciel.

## Revendications

1. Système d'alimentation électrique comprenant une pluralité de batteries (4A, 4B, 4C) équipées d'un système de commande et de protection (8A, 8B, 8C) électronique commandé par logiciel, branchées en parallèle pour alimenter en électricité une ou plusieurs charges (10, 12), le système de commande et de protection électronique de chaque batterie comportant des contacteurs de sécurité (14A, 16A ; 14B, 16B ; 14C, 16C) placés entre ladite batterie (4A, 4B, 4C) et la ou les charges (10, 12) à alimenter, et un module de commande (20A, 20B, 20C) configuré pour commander une ouverture ou une fermeture des contacteurs de sécurité (14A, 16A ; 14B, 16B ; 14C, 16C), ledit module de commande (20A, 20B, 20C) implémentant un logiciel, le système d'alimentation (2) étant **caractérisé en ce qu'**il est configuré pour :
- détecter une configuration de défaillance commune dans laquelle, pour chaque batterie (4A, 4B, 4C), une ouverture des contacteurs de sécurité (14A, 16A ; 14B, 16B ; 14C, 16C) est commandée, et
- commander une temporisation de l'ouverture desdits contacteurs de sécurité (14A, 16A ; 14B, 16B ; 14C, 16C) pendant une période de temporisation, et une ré-initialisation de chaque module de commande (20A, 20B, 20C) des contacteurs de sécurité (14A, 16A ; 14B, 16B ; 14C, 16C) des batteries durant ladite période de temporisation, la ré-initialisation étant effectuée par une coupure d'alimentation électrique des modules de commande (20A, 20B, 20C) pendant une durée de redémarrage.

2. Système d'alimentation électrique selon la revendication 1, comportant, pour chaque batterie (4A, 4B, 4C), un relais (40A, 40B, 40C) comprenant une paire de contacts (41A, 41B, 41C) et un organe de commande de l'ouverture/fermeture de ladite paire de contacts (41A, 41B, 41C), chaque organe de commande étant branché en sortie du module de commande (20A, 20B, 20C) de ladite batterie et la paire de contacts correspondante étant branchée en entrée d'un bloc de commande d'un premier relais temporisé (52).

3. Système d'alimentation électrique selon la revendication 2, dans lequel le premier relais temporisé (52) comprend le bloc de commande et pour chaque batterie des contacts (52A, 52B, 52C) propres à être commandés par ledit bloc de commande, les paires de contacts (41A, 41B, 41C) étant connectées en parallèle les unes des autres entre le bloc de commande et une borne de connexion commune (55), lesdits contacts (52A, 52B, 52C) du premier relais temporisé (52) étant connectés entre ladite borne de connexion commune (55) et un circuit de sécurité (22A, 22B, 22C) correspondant configuré pour commander le ou les contacteur(s) de sécurité (14A, 16A ; 14B, 16B ; 14C, 16C) associé(s) à la batterie (4A, 4B, 4C) correspondante.

4. Système d'alimentation électrique selon la revendication 3, dans lequel lorsque chaque paire de contacts (41A, 41B, 41C) est ouverte, à la suite d'une commande d'ouverture de chacun des contacteurs de sécurité par les modules de commande (20A, 20B, 20C), l'alimentation du bloc de commande du premier relais temporisé (52) est coupée et entraîne une fermeture desdits contacts (52A, 52B, 52C) du premier relais temporisé (52) correspondants durant la période de temporisation de durée de temporisation prédéterminée.

5. Système d'alimentation électrique selon la revendication 4, dans lequel les contacts (52A, 52B, 52C) du premier relais temporisé (52) sont ouverts après écoulement de la durée de temporisation prédéterminée, ladite durée de temporisation prédéterminée étant de préférence comprise entre 10 secondes et une minute.

6. Système d'alimentation électrique selon l'une des revendications 4 ou 5, comportant en outre un deuxième relais temporisé (58) propre à être mis en fonctionnement dès la coupure d'alimentation du premier relais temporisé (52).

7. Système d'alimentation électrique selon la revendication 6, comportant des contacts (58A, 58B, 58C) associés au deuxième relais temporisé (58) branchés en entrée du module de commande (20A, 20B, 20C) de chaque batterie (4A, 4B, 4C), et propres à commander l'alimentation en énergie électrique de chaque module de commande, la mise en fonctionnement du deuxième relais temporisé (58) entraînant une ouverture desdits contacts (58A, 58B, 58C) associés au deuxième relais temporisé (58) pendant la durée de redémarrage.

8. Système d'alimentation électrique selon la revendication 7, dans lequel la durée de redémarrage est inférieure à la durée de temporisation, lesdits contacts (58A, 58B, 58C) associés au deuxième relais temporisé (58) étant fermés suite à l'écoulement de la durée de redémarrage, la durée de redémarrage étant de préférence comprise entre 3 et 10 secondes.

9. Système d'alimentation électrique selon l'une quelconque des revendications précédentes, dans lequel chaque système de commande et de protection (8A, 8B, 8C) comporte un circuit de sécurité (22A, 22B, 22C) associé au contacteur de sécurité et configuré pour commander, en fonction de signaux reçus du module de commande (20A, 20B, 20C) correspondant, ledit contacteur de sécurité, le circuit de sécurité comprenant une bobine (24A, 24B, 24C) et une capacité (26A, 26B, 26C) branchées en parallèle.

10. Système d'alimentation électrique selon l'une quelconque des revendications précédentes, dans lequel lesdites batteries (4A, 4B, 4C) comportent des accumulateurs lithium-ion (6A, 6B, 6C).

11. Véhicule ferroviaire comportant un système d'alimentation électrique conforme aux revendications 1 à 10.

## Patentansprüche

1. Stromversorgungssystem, umfassend eine Vielzahl von Batterien (4A, 4B, 4C), die mit einem softwaregesteuerten elektronischen Steuer- und Schutzsystem (8A, 8B, 8C) ausgestattet sind und parallel geschaltet sind, um eine oder mehrere Lasten (10, 12) mit Strom zu versorgen, das elektronische Steuer- und Schutzsystem von jeder Batterie umfassend Sicherheitsschütze (14A, 16A; 14B, 16B; 14C, 16C), die zwischen der Batterie (4A, 4B, 4C) und der oder den zu versorgenden Lasten (10, 12) platziert sind, und ein Steuermodul (20A, 20B, 20C), das konfiguriert ist, um ein Öffnen oder Schließen der Sicherheitsschütze (14A, 16A; 14B, 16B; 14C, 16C) zu steuern, wobei das Steuermodul (20A, 20B, 20C) eine Software implementiert, wobei das Stromversorgungssystem (2) **dadurch gekennzeichnet ist, dass** es zu Folgendem konfiguriert ist:
- Erkennen einer gemeinsamen Fehlerkonfiguration, bei der für jede Batterie (4A, 4B, 4C) ein Öffnen der Sicherheitsschütze (14A, 16A; 14B, 16B; 14C, 16C) gesteuert wird, und
- Befehlen einer Verzögerung des Öffnens der Sicherheitsschütze (14A, 16A; 14B, 16B; 14C, 16C) während einer Verzögerungsperiode und einer Neuinitialisierung von jedem Steuermodul (20A, 20B, 20C) der Sicherheitsschütze (14A, 16A; 14B, 16B; 14C, 16C) der Batterien während der Verzögerungsperiode, wobei die Neuinitialisierung durch eine Unterbrechung der Stromversorgung der Steuermodule (20A, 20B, 20C) während einer Neustartzeit durchgeführt wird.

2. Stromversorgungssystem nach Anspruch 1, umfassend, für jede Batterie (4A, 4B, 4C), ein Relais (40A, 40B, 40C) umfassend einem Kontaktpaar (41 A, 41 B, 41 C) und ein Steuerorgan für das Öffnen/Schließen des Kontaktpaars (41 A, 41 B, 41 C), wobei jedes Steuerorgan an den Ausgang des Steuermoduls (20A, 20B, 20C) der Batterie angeschlossen ist und das entsprechende Kontaktpaar an den Eingang eines Steuerblocks eines ersten zeitgeschalteten Relais (52) angeschlossen ist.

3. Stromversorgungssystem nach Anspruch 2, wobei das erste zeitgeschaltete Relais (52) den Steuerblock und für jede Batterie Kontakte (52A, 52B, 52C) umfasst, die geeignet sind, von dem Steuerblock gesteuert zu werden, wobei die Kontaktpaare (41A, 41B, 41C) parallel zueinander zwischen dem Steuerblock und einem gemeinsamen Verbindungsanschluss (55) geschaltet sind, wobei die Kontakte (52A, 52B, 52C) des ersten zeitgeschalteten Relais (52) zwischen dem gemeinsamen Verbindungsanschluss (55) und einer entsprechenden Sicherheitsschaltung (22A, 22B, 22C) geschaltet sind, die konfiguriert ist, um das oder die Sicherheitsschütze (14A, 16A; 14B, 16B; 14C, 16C), die mit der entsprechenden Batterie (4A, 4B, 4C) verbunden sind, zu steuern.

4. Stromversorgungssystem nach Anspruch 3, wobei, wenn jedes Kontaktpaar (41A, 41B, 41C) geöffnet ist, infolge eines Öffnungsbefehls jedes der Sicherheitsschütze durch die Steuermodule (20A, 20B, 20C) die Stromversorgung des Steuerblocks des ersten zeitgeschalteten Relais (52) unterbrochen wird und ein Schließen der entsprechenden Kontakte (52A, 52B, 52C) des ersten zeitgeschalteten Relais (52) während der Verzögerungsperiode mit einer vorbestimmten Verzögerungsdauer bewirkt.

5. Stromversorgungssystem nach Anspruch 4, wobei die Kontakte (52A, 52B, 52C) des ersten zeitgeschalteten Relais (52) nach Ablauf der vorbestimmten Verzögerungszeit geöffnet werden, wobei die vorbestimmte Verzögerungszeit vorzugsweise zwischen 10 Sekunden und einer Minute ist.

6. Stromversorgungssystem nach einem der Ansprüche 4 oder 5, ferner umfassend ein zweites zeitgeschaltetes Relais (58), das geeignet ist, um in Betrieb genommen zu werden, sobald die Stromversorgung des ersten zeitgeschalteten Relais (52) unterbrochen wird.

7. Stromversorgungssystem nach Anspruch 6, umfassend Kontakte (58A, 58B, 58C), die mit dem zweiten zeitgeschalteten Relais (58) assoziiert sind, das an dem Eingang des Steuermoduls (20A, 20B, 20C) von jeder Batterie (4A, 4B, 4C) angeschlossen und geeignet ist, um die Versorgung von jedem Steuermodul mit elektrischer Energie zu steuern, wobei das Einschalten des zweiten zeitgeschalteten Relais (58) ein Öffnen der mit dem zweiten zeitgeschalteten Relais (58) assoziierten Kontakte (58A, 58B, 58C) während der Dauer des Neustarts bewirkt.

8. Stromversorgungssystem nach Anspruch 7, wobei die Dauer des Neustarts kürzer ist als die Verzögerungszeit, wobei die Kontakte (58A, 58B, 58C), die mit dem zweiten zeitgeschalteten Relais (58) assoziiert sind, nach Ablauf der Dauer des Neustarts geschlossen werden, wobei die Dauer des Neustarts vorzugsweise zwischen 3 und 10 Sekunden ist.

9. Stromversorgungssystem nach einem der vorherigen Ansprüche, wobei jedes Steuer- und Schutzsystem (8A, 8B, 8C) eine Sicherheitsschaltung (22A, 22B, 22C) aufweist, die mit dem Sicherheitsschütz assoziiert und konfiguriert ist, um abhängig von Signalen, die von dem entsprechenden Steuermodul (20A, 20B, 20C) empfangen werden, den Sicherheitsschütz zu steuern, wobei die Sicherheitsschaltung eine Spule (24A, 24B, 24C) und eine Kapazität (26A, 26B, 26C) umfasst, die parallel geschaltet sind.

10. Stromversorgungssystem nach einem der vorherigen Ansprüche, wobei die Batterien (4A, 4B, 4C) Lithium-Ionen-Akkumulatoren (6A, 6B, 6C) umfassen.

11. Schienenfahrzeug, umfassend ein Stromversorgungssystem gemäß den Ansprüchen 1 bis 10.

## Claims

1. A power supply system comprising a plurality of batteries (4A, 4B, 4C) equipped with a software-controlled electronic control and protection system (8A, 8B, 8C) connected in parallel to supply power to one or more loads (10, 12), the electronic control and protection system of each battery comprising safety contactors (14A, 16A; 14B, 16B, 14C, 16C) located between said battery (4A, 4B, 4C) and the load(s) (10, 12) to be powered, and a control module (20A, 20B, 20C) configured to order the opening or closing of the safety contactors (14A, 16A; 14B, 16B; 14C, 16C), said control module (20A, 20B, 20C) implementing a software program, the power supply system (2) being **characterised in that** it is configured to:
- detect a common fault configuration in which, for each battery (4A, 4B, 4C), an opening of the safety contactors (14A, 16A; 14B, 16B; 14C, 16C) is ordered, and
- ordering a delay in the opening of said safety contactors (14A, 16A; 14B, 16B; 14C, 16C) for a delay period, and a resetting of each control module (20A, 20B, 20C) of the safety contactors (14A, 16A; 14B, 16B; 14C, 16C) of the batteries during said delay period, the resetting being performed by cutting off the power supply to the control modules (20A, 20B, 20C) for a restart period of time.

2. The power supply system according to claim 1, comprising, for each battery (4A, 4B, 4C), a relay (40A, 40B, 40C) comprising a pair of contacts (41 A, 41 B, 41C) and a member for ordering the opening/closing of said pair of contacts (41 A, 41 B, 41 C), each control member being connected to the output of the control module (20A, 20B, 20C) of said battery and the corresponding pair of contacts being connected to the input of a control unit of a first timer relay (52).

3. The power supply system according to claim 2, wherein the first timer relay (52) comprises the control unit and for each battery, contacts (52A, 52B, 52C) suitable for being controlled by said control unit, the pairs of contacts (41A, 41B, 41C) being connected in parallel to each other between the control unit and a common connection terminal (55), said contacts (52A, 52B, 52C) of the first timer relay (52) being connected between said common connection terminal (55) and a corresponding safety circuit (22A, 22B, 22C) configured to control the safety contactor(s) (14A, 16A; 14B, 16B; 14C, 16C) associated with the corresponding battery (4A, 4B, 4C).

4. The power supply system according to claim 3, wherein when each pair of contacts (41A, 41B, 41C) is opened, following an order to open each of the safety contactors by the control modules (20A, 20B, 20C), the power supply to the control unit of the first timer relay (52) is cut off and causes said contacts (52A, 52B, 52C) of the corresponding first timer relay (52) to close during the delay period of a predetermined delay duration.

5. The power supply system according to claim 4, wherein the contacts (52A, 52B, 52C) of the first timer relay (52) are opened after the predetermined delay has elapsed, said predetermined delay preferably being between 10 seconds and one minute.

6. The power supply system according to one of claims 4 or 5, further comprising a second timer relay (58) adapted to be brought into operation as soon as the power supply to the first timer relay (52) is cut off.

7. The power supply system according to claim 6, comprising contacts (58A, 58B, 58C) associated with the second timer relay (58) connected to the input of the control module (20A, 20B, 20C) of each battery (4A, 4B, 4C), and suitable for controlling the supply of electrical power to each control module, the operation of the second timer relay (58) resulting in the opening of the said contacts (58A, 58B, 58C) associated with the second timer relay (58) for the duration of the restart.

8. The power supply system according to claim 7, wherein the restart time is shorter than the delay time, said contacts (58A, 58B, 58C) associated with the second time relay (58) being closed following the elapsing of the restart time, the restart time preferably being between 3 and 10 seconds.

9. The power supply system according to any one of the preceding claims, wherein each control and protection system (8A, 8B, 8C) comprises a safety circuit (22A, 22B, 22C) associated with the safety contactor and configured to control, depending on signals received from the corresponding control module (20A, 20B, 20C), said safety contactor, the safety circuit comprising a coil (24A, 24B, 24C) and a capacitor (26A, 26B, 26C) connected in parallel.

10. The power supply system according to any one of the preceding claims, wherein said batteries (4A, 4B, 4C) comprise lithium-ion accumulators (6A, 6B, 6C).

11. A railway vehicle comprising a power supply system according to claims 1 to 10.
